# EUROPEAN PATENT SPECIFICATION

(11) **EP 1 406 841 B1**
(45) Date of publication and mention of the grant of the patent: **07.05.2008**
(21) Application number: 02774006.7
(22) Date of filing: 30.05.2002
(51) Int. Cl.: C02F 1/40, E03F 5/16, B01D 17/02

(54) **METHOD FOR REMOVING OIL, FAT AND GREASE FROM WATER**
VERFAHREN ZUR ABTRENNUNG VON ÖL, FETT UND SCHMIERFETT AUS WASSER
PROCEDE D'EXTRACTION D'HUILE, DE CORPS GRAS ET DE GRAISSE DE L'EAU

(30) Priority: 31.05.2001 AU PR536501
(43) Date of publication of application: 14.04.2004
(73) Proprietor: World Max Alliance Limited, Tortola (VG)
(72) Inventor: Woodley, Paul Suite A-4-8, 4th Floor, 30450 Ipoh, Perak Darul Ridzuan (MY); Foong, Weng Chuen Desa Tambun Indah, 31400 Ipoh, Perak Darul Ridzuan (MY)
(74) Representative: Tönhardt, Marion
(86) International application number: PCT/AU2002/000689
(87) International publication number: WO 2002/096812

(56) References cited:
- EP-A- 0 445 576
- DE-U1- 8 419 225
- DE-U1- 9 006 098
- GB-A- 124 551
- DATABASE WPI Week 199008, Derwent Publications Ltd., London, GB; Class D15, AN 1990-057619, XP002998399 & SU 1 500 626 A (MOSC FATS RES INST) 15 August 1989
- DATABASE WPI Week 198520, Derwent Publications Ltd., London, GB; Class D15, AN 1985-121361, XP002998400 & SU 1 121 236 A (TARAN V M) 30 October 1984
- DATABASE WPI Week 198511, Derwent Publications Ltd., London, GB; Class D15, AN 1985-063561, XP002998327 & EP 0 134 061 A (LEGRAND H L) 13 March 1985

## Description

### FIELD OF THE INVENTION

The invention relates to a method of removing free oil, fat and grease from a continuous flow of water or similar liquid. The system allows the free oil, fat and grease to be separated in an efficient manner within a chamber. The separated free oil, fat and grease is then removed in concentrated form from the top of the chamber whilst water with significantly reduced free oil, fat and grease is allowed to exit from the bottom of the chamber via an external level control device.

### BACKGROUND OF THE INVENTION

Most industries face significant problems with processing and disposal of liquid waste that is contaminated with free oil, fat and grease. This type of waste poses a major threat to the global environment and there is a need for a simple and cost effective solution to remove these contaminants to allow clean waster discharge to public sewers, waste treatment plants, inland waterways and seas or oceans.

DE 90 06 098 U1 discloses a separator having multiple annular chambers within a housing. The annular chambers concentrically surround a central chamber that leads to a lower exit pipe for clarified water. Outlet pipes for separated oil are disposed above the annular chambers for receiving the oil at the upper portion of the housing, from where it is recovered through an overflow outlet. An inlet for raw fluid in provided about half-way up the outer side wall of the housing.

EP 0 445 576 A2 discloses a similar separator, that includes a valve and drainage pipe for connection to a suction line for removing fluid from the bottom of the annular chambers.

### BRIEF DISCUSSION OF THE INVENTION

The invention is defined by independent claim 1. The sub-claims 2-4 specify preferred features.

The invention relates to a vertical cylindrical vessel into which are placed a series of cylinders some with end plates and some without that form a series of vertical annulus flow areas. This arrangement allows the liquid which is contaminated with free oil, fat and grease to flow in upwards or downwards directions through the annulus areas. This flow which takes place at ultra low velocity allows the free oil, fat and grease to coalesce and rise vertically and separate out until a free oil, fat and grease layer is formed at the top of the vertical cylinder where it can be removed via an overflow outlet. The water phase which has now been de-contaminated is allowed to discharge from the bottom outlet of the cylindrical vessel. An external level control device is fitted to enable variable control of the water/free oil, fat and grease levels within the vertical cylindrical vessel.

### DETAILED DESCRIPTION OF THE INVENTION

### REFER DRAWING Fig. 1

A liquid such as water which is contaminated by free oil, fat or grease is supplied to the counter-flow separator by a non-emulsifying pump at an inlet, the oily water rises through a centrally located inlet pipe which is sized to suit the required flow rate. The oily water on reaching the outlet point of the vertical riser pipe separates into two streams. One of these streams is of large oil droplets that impinge on a first baffle plate which is of an inverted cone shape and is supported by one or more pillars to the top section of a second sleeve.

The large oil droplets which have a specific gravity less than that of the water carrier fluid coalesce on the underside of the inverted cone and rise to float on the surface of the carrier fluid, in this case water, to form an oil layer at a free oil zone. At the same time, the carrier fluid water which also contains finer oil droplets of varying size is made to move in a downward direction through a third annulus chamber created by the outer body and the inner, second sleeve.

The velocity of this downward movement between the outer body and the second sleeve is such that remaining larger oil droplets being of a lighter specific gravity than the carrier fluid water coalesce together and invert and begin to move up against the downward flow of the carrier fluid water. Thus further separation takes place in the third annulus chamber.

The larger oil droplets that have coalesced together and are rising eventually merge with the previously separated oil at the free oil zone.

Carrier fluid water with finer oil droplets that are being carried in a downward direction reach the bottom of the third annulus chamber and are turned in an upward direction into a second annulus chamber between the second sleeve and an inner, first sleeve. Here the finer oil droplets are rising with the carrier fluid water and these finer oil droplets coalesce on their vertical movement through the second annulus chamber to form lager oil droplets. These larger oil droplets impinge on a second baffle plate at the top of the second annulus chamber and due to the difference in specific gravity between the oil and the carrier fluid water, the small coalesced oil droplets rise vertically through one or more outlet pipes and up into the oil collection area free oil zone.

Carrier fluid water which is now more or less oil free moves into a first annulus chamber between the first sleeve and the outside of the inlet pipe and moves in a downward direction.

A small quantity of air is introduced via a connection and a sparge pipe at the bottom of the first annulus chamber. This air rises and adheres to any fine oil droplets that may be carried in a downward direction through the first annulus chamber and separates any remaining very fine oil droplets from the carrier fluid water.

The fine oil droplets are carried by the air vertical to the top of the first annulus chamber where the oil coalesces with larger oil droplets on the second baffle plate. The air and coalesced oil droplets rise through the one or more outlet pipes (mentioned above) into the oil collection zone free oil zone.

Carrier fluid water which is more or less free of oil and is exiting from the first annulus chamber moves downwards into an exit chamber and on through an outlet pipe. This pipe can be adjusted in a vertical movement up or down to permit the level of free oil in zone to be maintained until such time as the level of free oil rises on top of the carrier fluid water to allow the free oil to exit at the oil outlet connection.

Provision is made to allow any solid material that may accumulate in the exit chamber to be removed through an outlet.

## Claims

1. A continuous flow separator for removing oil, fat, grease and the like from waste water comprising:
a vertical cylindrical vessel having
a centrally located waste water inlet at its base,
a vertical riser pipe located centrally within the vessel and in fluid communication with the inlet and having an opening at its top,
a first baffle plate located within the vessel and above the riser pipe,
an oil outlet connection for removing oil from a free oil zone that is located between the top of the riser pipe and the oil outlet connection,
a first annulus chamber formed between the riser tube and a first sleeve surrounding the riser tube,
a second annulus chamber formed between a second sleeve surrounding the first sleeve, the first and second annulus chambers being in fluid communication with each other only at their respective tops, a third annulus chamber formed between the second sleeve and an outer wall of the cylindrical vessel, the second and third annulus chambers being in fluid communication with each other only at their respective bottoms,
a second baffle plate located above the first and second sleeves and separating the first and second annulus chambers from the free oil zone, while at least one oil outlet pipe is provided for removing oil from the top of the first and second annulus chambers to the free oil zone,
an air inlet connected to a sparge pipe located at the bottom of the first annulus chamber and
a waste water exit chamber having a waste water outlet pipe located below the bottom of the first annulus chamber,
wherein said first baffle plate has an inverted cone shape, and
wherein said waste water outlet pipe can be adjusted in a vertical direction to control the level of liquid within the vessel.

2. A continuous flow separator as defined in claim 1 further comprising a pump to supply waste water to the waste water inlet.

3. A continuous flow separator as defined in claim 2 wherein said pump is a non-emulsifying pump.

4. A continuous flow separator as defined in claim 1 wherein the exit chamber has a solid waste outlet to permit the removal of solids which may accumulate in the exit chamber.

## Patentansprüche

1. Stufenloser Durchflußabscheider zum Abtrennen von Öl, Fett, Schmierfett und dergleichen von Abwasser, der aufweist:
einen vertikalen zylindrischen Behälter mit
einem zentral angeordneten Abwassereinlauf auf seiner Grundfläche,
einem vertikalen Steigrohr, zentral in dem Behälter angeordnet und in fluidischer Verbindung mit dem Einlauf und mit einer Öffnung an seinem oberen Ende,
einer ersten Ablenkplatte, angeordnet in dem Behälter und oberhalb des Steigrohrs,
einem Ölablaufanschluß zum Entfernen von Öl aus einer Freiölzone, welche zwischen dem oberen Ende des Steigrohrs und dem Ölablaßanschluß angeordnet ist,
einer ersten Ringkammer, ausgebildet zwischen dem Steigrohr und einer das Steigrohr umgebenden ersten Manschette,
einer zweiten Ringkammer, ausgebildet zwischen einer zweiten, die erste Manschette umgebenden Manschette, wobei die erste und die zweite Ringkammer nur an ihren zugehörigen oberen Enden in fluidischer Verbindung miteinander stehen, einer dritten Ringkammer, ausgebildet zwischen der zweiten Manschette und einer Außenwand des zylindrischen Behälters, wobei die zweite und die dritte Ringkammer nur an ihren entsprechenden unteren Enden in fluidischer Verbindung miteinander stehen,
einer zweiten oberhalb der ersten und der zweiten Manschette angeordneten Ablenkplatte, wobei diese die erste und die zweite Ringkammer von der Freiölzone trennt, während zumindest ein Ölablaufrohr zum Entfernen des Öls aus dem oberen Ende der ersten und zweiten Ringkammer in die Freiölzone bereitgestellt ist,
einer Lufteintrittsöffnung, welche mit einem Spülrohr verbunden ist, welches an dem unteren Ende der ersten Ringkammer angeordnet ist, und
einer Abwasseraustrittskammer, welche ein Abwasserablaufrohr aufweist und unterhalb des unteren Endes der ersten Ringkammer angeordnet ist,
wobei die erste Leitplatte eine inverse Kegelform aufweist und wobei das Abwasserablaufrohr in seiner vertikalen Ausrichtung verstellt werden kann, um den Flüssigkeitspegel in dem Behälter zu regulieren.

2. Stufenloser Durchflußabscheider nach Anspruch 1, welcher darüber hinaus eine Pumpe zum Einspeisen des Abwassers in den Abwassereinlauf aufweist.

3. Stufenloser Durchflußabscheider nach Anspruch 2, bei dem die Pumpe eine nichtemulgierende Pumpe ist.

4. Stufenloser Durchflußabscheider nach Anspruch 1, bei dem die Austrittskammer eine Austrittsöffnung für Feststoffe aufweist, um das Entfernen von Feststoffen, welche sich in der Auslaßkammer ansammeln können, zu ermöglichen.

## Revendications

1. Séparateur d'écoulement continu destiné à éliminer l'huile, les matières grasses, la graisse et similaires des eaux usées comprenant :
une cuve cylindrique verticale comportant
une arrivée d'eaux usées située de manière centrale au niveau de sa base,
une colonne montante verticale située de manière centrale dans la cuve et en communication fluidique avec l'arrivée et comportant une ouverture au niveau de sa partie supérieure,
une première plaque de dusage située dans la cuve et au-dessus de la colonne montante,
une connexion d'évacuation d'huile destinée à éliminer l'huile d'une zone d'huile libre qui est située entre la partie supérieure de la colonne montante et la connexion d'évacuation d'huile,
une première chambre annulaire formée entre la colonne montante et un premier manchon entourant la colonne montante,
une deuxième chambre annulaire formée entre un second manchon entourant le premier manchon, les première et deuxième chambres annulaires étant en communication fluidique l'une avec l'autre uniquement au niveau de leurs parties supérieures respectives, une troisième chambre annulaire formée entre le second manchon et une paroi extérieure de la cuve cylindrique, les deuxième et troisième chambres annulaires étant en communication fluidique l'une avec l'autre uniquement au niveau de leurs parties inférieures respectives,
une seconde plaque de dusage située au-dessus des premier et second manchons et séparant les première et deuxième chambres annulaires de la zone d'huile libre, tandis qu'au moins une colonne d'évacuation d'huile est destinée à éliminer l'huile de la partie supérieure des première et deuxième chambres annulaires vers la zone d'huile libre,
une arrivée d'air connectée à une colonne perforée située au niveau de la partie inférieure de la première chambre annulaire et
une chambre de sortie d'eaux usées comportant une colonne d'évacuation d'eaux usées située en dessous de la partie inférieure de la première chambre annulaire,
dans lequel ladite première plaque de dusage a une forme de cône inversé, et
dans lequel ladite colonne d'évacuation d'eaux usées peut être ajustée dans une direction verticale pour réguler le niveau de liquide dans la cuve.

2. Séparateur d'écoulement continu selon la revendication 1, comprenant en outre une pompe pour fournir les eaux usées à l'arrivée d'eaux usées.

3. Séparateur d'écoulement continu selon la revendication 2, dans lequel ladite pompe est une pompe sans émulsion.

4. Séparateur d'écoulement continu selon la revendication 1, dans lequel la chambre de sortie comporte une vidange pour solides pour permettre l'élimination de solides qui peuvent s'accumuler dans la chambre de sortie.
